(19) Europäisches Patentamt
European Patent Office
Office européen des brevets

(11) **EP 1 980 994 A1**

(12) **EUROPEAN PATENT APPLICATION**

(43) Date of publication:
**15.10.2008 Bulletin 2008/42**

(51) Int Cl.:
***G06T 7/20*** *(2006.01)*

(21) Application number: **07251591.9**

(22) Date of filing: **13.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(72) Inventor: **The designation of the inventor has not yet been filed**

(74) Representative: **Whitlock, Holly Elizabeth Ann et al R G C Jenkins,
26 Caxton Street
London SW1H 0RJ (GB)**

(71) Applicants:
- **Mitsubishi Electric Information Technology Centre
  Europe B.V.
  Guildford,
  Surrey GU2 7YD (GB)**
  Designated Contracting States:
  **GB**
- **MITSUBISHI ELECTRIC CORPORATION
  Chiyoda-ku
  Tokyo 100-8310 (JP)**
  Designated Contracting States:
  **AT BE BG CH CY CZ DE DK EE ES FI FR GR HU IE IS IT LI LT LU LV MC MT NL PL PT RO SE SI SK TR**

(54) **Method for tracking multiple objects with occlusions**

(57)    A method of tracking objects in a sequence of images uses a non-parametric edge-based probabilistic model of objects using a contour model of edge features, using sample points on a contour, and an edge model of edge features, using position and orientation of edge pixels.

Fig. 1

**Description**

The invention relates to a method and apparatus for representing one or more objects in an image or sequence of images, and for tracking multiple objects.

Background to the invention (prior art)

Various techniques for tracking one or more objects in images are known.
Existing work includes:

1. Mean shift tracking algorithm using colour histogram (D. Comaniciu, V. Ramesh, and P. Meer, "Real-time tracking of non-rigid objects using mean shift," in Proc. IEEE Computer Vision and Pattern Recognition Conference, vol. 2, pp. 142-149, 2000; also US 6,590,999).
2. Tracking with kernel density estimation (A. Elgammal, R. Duraiswami, and L. Davis, "Probabilistic tracking in joint feature-spatial spaces," in Proc. IEEE Computer Vision and Pattern Recognition Conference, vol. 1, pp. 781-788, 2003).
3. Joint segmentation and tracking (A. Elgammal and L. Davis, "Probabilistic framework for segmenting people under occlusion," in Proc. International Conference on Computer Vision, pp. 145-152, 2001).
4. Segmentation as tracking using colour mixture model (Y. Raja, S. J. McKenna, S. Gong, "Colour model selection and adaption in dynamic scenes," in Proc. European Conference on Computer Vision, pp. 460-474, 1998).
5. Tracking with fuzzy histogram (Y. Jin and F. Mokhtarian, "Fuzzy histogram for visual tracking," submitted to Proc. IEEE Computer Vision and Pattern Recognition Conference, 2007).
6. Tracking contours with EM algorithm (Arthur E. C. Pece, "The Kalman-EM contour tracker", Proc. Int'1 Workshop on Statistical and Computational Theories of Vision, 2003).
7. Colour histogram based tracking with an EM-like algorithm (Z. Zivkovic and B. Krose, "An EM-like algorithm for color-histogram-based object tracking," Proc. IEEE Computer Vision and Pattern Recognition Conference, vol. 1, pp. 798-803, 2004).
8. Tracking with EM algorithm (T. Yu and Y. Wu, "Differential tracking based on spatial-appearance model (SAM)," Proc. IEEE Computer Vision and Pattern Recognition Conference, pp. 720-727, 2006).
9. Tracking with variational inference (J. Vermaak, N. D. Lawrence and P. Perez, "Variational inference for visual tracking," Proc. IEEE Computer Vision and Pattern Recognition Conference, pp. 773-780, 2003).
10. Feature-based object recognition (W. M. Wells, "Statistical approaches to feature-based object recognition," International Journal of Computer Vision, vol. 1, no.2, pp. 63-98, 1997).
11. Bearing-only probabilistic multi-hypothesis tracking (PMHT) (P. Willett, Y. Ruan and R. Streit, "PMHT: problems and some solutions", IEEE Transactions on Aerospace and Electronic Systems, vol. 38, no. 3, pp. 738-754, 2002).
12. Multiple-object tracking with Bayesian correlation and particle filter (M. Isard and J. MacCormick, "BraMBLe: A bayesian multiple-blob tracker," Proc. International Conference on Computer Vision, vol. 2, pp.34-41, 2001).
13. Multiple-object tracking with particle filter (Y. Wu, T. Yu and G. Hua, "Tracking appearances with occlusions," Proc. IEEE Computer Vision and Pattern Recognition Conference, pp. 789-795, 2003).
14. Multiple-contour tracking with Joint Probabilistic Data Association (JPDA) and partitioned sampling particle filter (J. MacCormick and A. Blake, "A Probabilistic Exclusion Principle for Tracking Multiple Objects", International Journal of Computer Vision, vol. 39, no.1, pp.57=71, 2000).
15. Single-object tracking with particle filter (Y. Jin and F. Mokhtarian, " Towards robust head tracking by particles," Proc. IEEE International Conference on Image Processing, 2005).

The present invention especially, but not exclusively, addresses the issue of tracking multiple objects with occlusions.
Problems of existing systems include the following:

- Most are designed for single object tracking only. Multiple-object tracking is simplified as tracking multiple single objects. It does not perform well in case of occlusions as there is no exclusion principle that assures the same measurement can not be assigned to different objects and occluded objects maybe lost [1, 2, 5, 6, 7, 8, 9, 15].
- Algorithms based on simple segmentation/classification lead to inaccurate results [4].
- Joint segmentation and tracking using exhaustive search is computationally prohibitive and relies on an initial segmentation from the background [3].
- Fuzzy spatio-colour histogram is used as object model in [5].
  Similarity measure used is the same as [1]. Tracking uses an EM-like algorithm similar to [7] but pixel gradient information is used instead for optimization. Note that EM-like algorithm is not EM algorithm so it can not guarantee to find the local mode. Thus the object model, similarity measure and optimization procedure are different in comparison with the proposed method.

- Feature-based object recognition [10] is only for single objects without using prior, similar to single object tracking with EM using maximum likelihood estimation, in the manner of the proposed method.
- Bearing-only multiple-target tracking with PMHT does not use visual features [11].
- For multiple-object tracking with particle filter, the number of samples grows exponentially with the number of objects and usually the depth order of multiple objects is needed or must be jointly estimated [12, 13].
- Multiple-contour tracking with partitioned sampling particle filter using edge features and Joint Probabilistic Data Association (JPDA) with exclusion principle [14] - this cannot be easily extended to track more than two objects.
- A similar object model using both contour samples and edge pixels inside contour is used in [15], however it is a template for matching with only the spatial position and discrete quantized orientation. In the current method, the non-parametric contour model and the non-parametric edge model include not only the spatial position and orientation as mean but also covariance of spatial position and orientation. In addition, the orientation in object model is not quantized and is a continuous value.

Aspects of the invention are set out in the accompanying claims.

The method of representing an object or objects according to an aspect of the invention produces a representation which can be stored or further processed, for example, for tracking purposes.

According to an embodiment of the invention there is provided a method of tracking objects in a sequence of images using a non-parametric edge-based probabilistic model of objects using a contour model of edge features, using sample points on a contour, and an edge model of edge features, using position and orientation of edge pixels.

For example, a contour may be a perimeter of an object, and other edge features may correspond to edges within the perimeter, but the contour model and edge model are not so limited.

As described below, preferably tracking is performed by optimizing an objective function comprising a likelihood comprising a probabilistic model.

As a result of the invention, improved performance in tracking multiple objects and handling occlusions has been found.

In particular, according to a preferred embodiment, a proposed edge-based model, preferably in combination with a selected probabilistic motion transformation model and associated selected optimization techniques have been found to give good results.

Features of a proposed method of an embodiment of the invention are discussed below.

One aspect of the proposed method is to allow measured visual features to "belong" (with varying weight of probability) to several objects at once and then to obtain a tracking result (that is, a joint prediction of the state of all objects) that is simultaneously optimized with respect to all the weights. This allows the method to handle possible occlusions among objects beneficially, by tracking them without ever making "hard" decisions about the occlusion configuration.

The proposed method solves the problems of single-object trackers, by jointly estimating the state of objects which may occlude one another. It improves on the performance of previous joint-tracking algorithms, by using a better visual-feature model and by implementing soft association of measurements with object models. The latter also improves the computational efficiency, with respect to prior art approaches.

The proposed method formulates visual tracking using mixture models as a Bayesian incomplete data problem. Object appearance is modeled by a mixture model (MM) and measurements in the image are associated with a generative model which is a mixture of mixture models (MMM) including object models and a clutter model or background model, if available. Observable measurements are regarded as samples from the generative model, which is incomplete, and unobservable associations of measurements to densities in the generative model are regarded as missing data. Based on this formulation, a probabilistic framework for multiple-object tracking using the Expectation-Maximization (EM) algorithm, variational inference and a variational particle filter is proposed.

By introducing the missing data, estimation is divided into two steps rather than directly estimating object state. It alternately estimates the probability of missing data given the object state and estimates the object state given the probability of missing data. The first step is to soft assign or label measurements by computing the probability of missing data given the object state, and then to compute the synthetic measurement and covariance for each density in the object mixture models. The synthetic covariance will be much larger for occluded densities in comparison with that of non-occluded densities, so synthetic measurements associated with occluded densities will not much affect the estimation of object states. The EM algorithm and variational inference iteratively improve the estimation of probability of missing data and estimation of object states. As variational inference is an effective and efficient approximation of posterior, the variational particle filter is further proposed for multiple-object tracking. The basic idea is to generate samples from a proposal distribution based on variational inference, so that the number of particles needed for multiple-object tracking can be significantly reduced.

The proposed approach differs from previous similar work on contour tracking mainly in three aspects: object model, likelihood and inference used. In the prior art, the object model only includes contour samples and edge pixels inside are not used, the association of measurements to contour sample points is not regarded as missing data and hard association is used by drawing a normal and taking the nearest neighbour. A Kalman filter or particle filter is used for single object tracking. In comparison with the prior art, the object model includes not only contour samples but also edge pixel inside contour and so is more discriminative than contour samples alone. The likelihood used allows 1. one measurement can only be generated from one density 2. one density can generate multiple measurements. The first assumption is the same exclusion principle as essential to track objects during occlusion, while the second assumption is relaxed to allow one density to generate multiple measurements rather than one measurement only, which significantly reduces the complexity of likelihood to enumerate all feasible events. A variational particle filter is proposed for multiple object tracking, in which samples are drawn from a proposal distribution based on an approximated posterior using variational inference. This results in many more effective samples and the number of particles is significantly reduced in comparison with prior art particle filtering methods.

Experimental results have demonstrated the robust performance of the proposed method.

Embodiments of the invention will be described below with reference to the accompanying drawings of which:

Fig. 1 is a diagram illustrating a multiple-object tracking framework;
Fig. 2 is an example of an object model;
Fig. 3 is a diagram illustrating multiple-object tracking with EM algorithm;
Fig. 4 is a diagram illustrating multiple-object tracking with variational inference; and
Fig. 5 is a diagram illustrating multiple-object tracking with variational particle filter.

The proposed multiple-object tracking method according to an embodiment of the invention includes:

- Dynamical model
- Measurement extraction and weighting
- Probabilistic models including object models, clutter model, background model if available and likelihoods
- Prediction
- Gating and clustering
- Optimization with EM algorithm, variational inference or variational particle filter

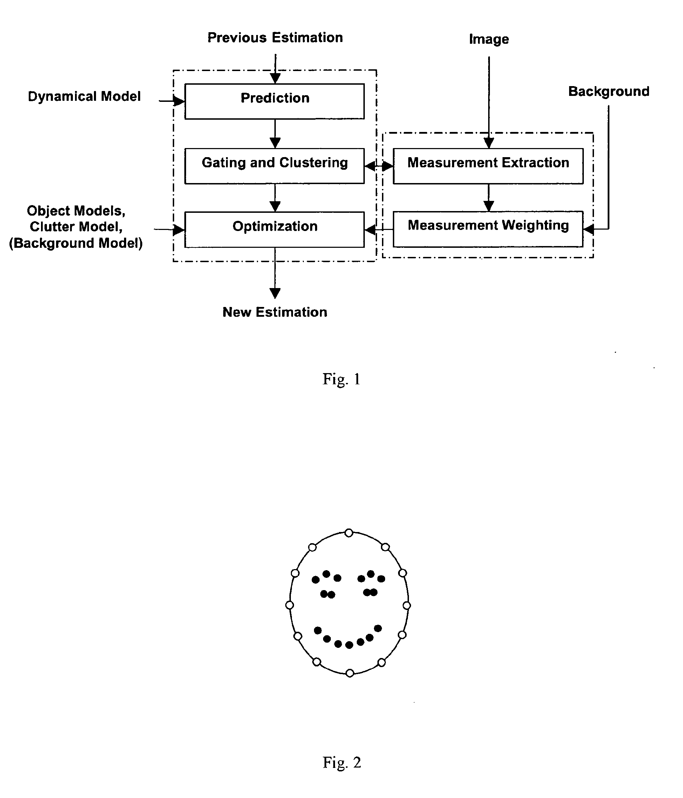

Figure 1 illustrates the framework of the proposed multiple-object tracking method.

The steps of the method are described below in general theoretical terms. The method is implemented by processing signals corresponding to a sequence of images using a suitable apparatus as described below.

A state space and dynamical model are established.

Tracking aims to estimate the transformation parameters of an object in successive image frames. Only the location and size of each object are considered to be estimated here and are denoted as state vector $x(t) = [x(t)\ y(t)\ a(t)\ b(t)]^T$ where $[x(t)\ y(t)]^T$ is the spatial position of the object centre, $a(t)$ and $b(t)$ is the width and height of the object respectively. A second order auto-regressive model $\mathbf{x}(t) = \mathbf{A}_1\mathbf{x}(t-1) + \mathbf{A}_2\mathbf{x}(t-2) + \mathbf{B}_0\mathbf{w}(t)$ is employed as the dynamical model and it can be rewritten as

$$\mathbf{X}(t) = \mathbf{A}\mathbf{X}(t-1) + \mathbf{B}\mathbf{w}(t) \qquad\qquad (1.\ 1)$$

where $\mathbf{X}(t) = \begin{bmatrix} \mathbf{x}(t) \\ \mathbf{x}(t-1) \end{bmatrix}$, $\mathbf{A} = \begin{bmatrix} \mathbf{A}_1 & \mathbf{A}_2 \\ \mathbf{I} & \mathbf{0} \end{bmatrix}$, $\mathbf{B} = \begin{bmatrix} \mathbf{B}_0 \\ \mathbf{0} \end{bmatrix}$, and $\mathbf{w}(t)$ is zero mean Gaussian noise $N(\mathbf{w}(t); \mathbf{0}, \mathbf{I})$.

Measurements in the image are extracted and weighted.

Measurements in the image are denoted as $\mathbf{Z} = \{\mathbf{z}_i\}_{i=1}^{N}$ where $\mathbf{z}_i$ is the i th measurement and $N$ is the number of measurements, $\mathbf{z} = \begin{bmatrix} \mathbf{u} \\ \mathbf{v} \end{bmatrix}$ where $\mathbf{u} = [x,\ y]^T$ is spatial position and $v$ is the feature vector. Measurements can be selected from a group of colour, texture or feature points or any combination of them. For colour measurements, the feature vector of each pixel can be extracted by projection in a predefined colour space such as RGB, YUV, HSV, or by projection in a feature space adapted online (R. T. Collins, Y. Liu and M. Leordeanu, "Online selection of discriminative tracking features," IEEE Transactions on Pattern Analysis and Machine Intelligence, vol. 27, no. 10, pp. 1631-1643, 2005). For texture measurements, gradient information or higher-order derivative information extracted by filter bank can be used as the feature vector of each pixel (J. Sullivan, A. Blake, M. Isard and J. MacCormick, "Object localization by Bayesian correlation," Proc. International Conference on Computer Vision, pp.1068-1075, 1999). It is also possible to combine colour with texture as the feature vector of each pixel. In case of feature points such as edge points, the Canny edge detector (for example) is applied to detect edge measurements and the orientation of each edge point is used as the feature vector v (M. Sonka, V. Hlavac and R. Boyle, Image Processing, Analysis and Machine Vision, 2nd Ed., PWS Publishing, Chapter 4, Section 4.3.5, pp. 90-93, 1998). The present embodiment uses an edge-based model (see below).

The above techniques (dynamical model and measurement extraction) are known, see for example some of the documents mentioned above.

The extracted measurements are weighted.

For edge-based tracking, histogram back-projection is used to incorporate background information. A background edge orientation histogram $\{h_i\}_{i=1}^B$ with $B$ bins of orientation is built by using the edge pixels in a rectangular window surrounding each object ($B = 8$ has been used in experiments). The background histogram is adapted online by weighted sum of previous background histogram and background histogram built given current object state estimation.

A ratio histogram $\{r_i\}_{i=1}^B$ is computed by

$$r_i = \min\left(\frac{\hat{h}}{h_i}, 1\right)$$

where $\hat{h} = \min\limits_{i:h_i>0}(h_i)$.

Measurement weight $\alpha_i$ is computed from the ratio histogram as

$$\alpha_i = \frac{r_{b(\mathbf{z}_i)}}{\sum\limits_{i=1}^{N} r_{b(\mathbf{z}_i)}} \times \frac{1}{2\sigma^2}$$

where $b(\mathbf{z}_i)$ denotes the bin to which $z_i$ belongs and $\sigma$ is a constant ($\sigma = 0.1$ has been used in experiments).

Measurements with orientations occurring most commonly in the background will have the lowest weight and measurements with orientations which are not in the background will have the highest weight. In other words, the weighting downweights edges similar to edges in the background, because there is uncertainty about whether the edge belongs to the object or to the background. If the ratio histogram is uniform, it degenerates to the case that each measurement has the same weight $\alpha_i = \alpha = \frac{1}{N} \times \frac{1}{2\sigma^2}$.

The above weighting helps to improve performance.

Measurements in the images are modelled using probabilistic models.

An object is represented by a probabilistic object model.

Object model is represented by a mixture model (MM)

$$p_o(\mathbf{z}) = \sum_{j=1}^{M} \omega_j p(\mathbf{z}|\mathbf{\theta}_j)$$

where $M$ is the number of densities in the mixture, $\theta_j$ is the $j$ th density parameter , $\omega_j$ is the mixture weight of the $j$ th density, density is in Gaussian form so $\theta_j = (\mu_j, \Sigma_j)$ and $p(\mathbf{z}|\theta_j) = N(\mathbf{z};\mu_j,\Sigma_j)$ with mean

$$\mu_j = \begin{bmatrix} \mathbf{u}_j \\ \mathbf{v}_j \end{bmatrix} \text{ and covariance } \Sigma_j = \begin{bmatrix} \Sigma_{u,j} & \mathbf{0} \\ \mathbf{0} & \Sigma_{v,j} \end{bmatrix} \text{ where } \Sigma_{u,j} \text{ is the covariance of spatial position and } \Sigma_{v,j} \text{ covariance}$$

of the feature vector.

The use of a mixture model to represent an object is a known technique, see for example some of the documents mentioned above.

According to the present embodiment, edge features of an object are used. These are extracted using a known technique such as a Canny edge detector mentioned above. More specifically, an object model is composed of a contour model using edge features on the contour or perimeter of an object and an edge model using edge features within the contour or perimeter, as shown in Fig. 2. In Fig. 2, contour sample points are represented by hollow circles and edge pixels by solid circles.

The object model $p_o(\mathbf{z})$ is then a mixture of a non-parametric contour model $P_{con}(\mathbf{z})$, which consists of contour sample points, and a non-parametric edge model $p_{edge}(\mathbf{z})$, which consists of edge pixels inside the object contour.

$$p_o(\mathbf{z}) = \pi_{con} p_{con}(\mathbf{z}) + \pi_{edge} p_{edge}(\mathbf{z})$$

where $\pi_{con}$ and $\pi_{edge}$ is the mixture weight of contour model and edge model respectively, $\pi_{con} + \pi_{edge} = 1$. In experiments, a higher weight has been used for the contour model with $\pi_{con} = 0.8$ and $\pi_{edge} = 0.2$.

For the contour model,

$$p_{con}(\mathbf{z}) = \frac{1}{M_{con}} \sum_{j=1}^{M_{con}} N(\mathbf{z};\mu_{con,j},\Sigma)$$

where $\mu_{con} = \begin{bmatrix} \mathbf{u}_{con} \\ \mathbf{v}_{con} \end{bmatrix}$, $\mathbf{u}_{con}$, is the spatial position of a contour sample point and $\mathbf{v}_{con}$ is the orientation of the normal at that contour sample. $\Sigma = \begin{bmatrix} \Sigma_u & \mathbf{0} \\ \mathbf{0} & \Sigma_v \end{bmatrix}$ where $\Sigma_u$ is the fixed covariance of spatial position and $\Sigma_v$ fixed covariance

of the feature vector ( $\Sigma_u = \begin{bmatrix} 1.5 \times 1.5 & 0 \\ 0 & 1.5 \times 1.5 \end{bmatrix}$ and $\Sigma_u = [2° \times 2°]$ were used in experiments). Note that as $\mathbf{v}_{con}$

can take two opposite orientations $\{\mathbf{v}, \mathbf{v} + \pi\}$, the distance of measurement orientation $\mathbf{v}_i$ to orientation of the normal at a contour sample $d(\mathbf{v}_i, \mathbf{v}_{con}) = \min(d(\mathbf{v}_i, \mathbf{v}), d(\mathbf{v}_i, \mathbf{v} + \pi))$. Object contour is expressed parametrically by $\mu = f(s, \mathbf{x})$, where $\mathbf{x}$ is the state vector and $s$ is a contour parameter. Contour samples are obtained by $\mu_j = f(s_j, \mathbf{x})$ where $s_j$ is the $j$ th uniform sample of contour parameter. An ellipse can be used for head tracking, so

$$\mathbf{u}(s,\mathbf{x}) = \begin{bmatrix} 1 & 0 & \cos s & 0 \\ 0 & 1 & 0 & \sin s \end{bmatrix}\mathbf{x}$$

$$\mathbf{v}(s, \mathbf{x}) = \arctan\left[\frac{a}{b}\tan s\right]$$

More complex contours can be represented by B-spline as

$$\mathbf{u}(s, \mathbf{x}) = \mathbf{U}(s)\mathbf{Q}(\mathbf{x})$$

$$\mathbf{v}(s, \mathbf{x}) = \arctan\left[-\frac{\mathbf{u}'_x(s, \mathbf{x})}{\mathbf{u}'_y(s, \mathbf{x})}\right]$$

where $\mathbf{u}'(s, \mathbf{x}) = \begin{bmatrix}\mathbf{u}'_x(s, \mathbf{x}) \\ \mathbf{u}'_y(s, \mathbf{x})\end{bmatrix} = \mathbf{U}'(s)\mathbf{Q}(\mathbf{x})$ is the derivative of u(s,x), $\mathbf{U}(s) = \begin{bmatrix}\mathbf{B}(s)^T & \mathbf{0} \\ \mathbf{0} & \mathbf{B}(s)^T\end{bmatrix}$ and U'(s)

is the derivative of $\mathbf{U}(s)$, $\mathbf{B}(s) = [B_0(s), B_1(s), \cdots, B_{NB-1}(s)]^T$, $N_B$ is the number of B-spline basis functions $B_i(s), i = 0,...,N_B$

-1, transformed control vector $\mathbf{Q}(\mathbf{x}) = \mathbf{W}\mathbf{x}$, shape matrix $\mathbf{W} = \begin{bmatrix}1 & 0 & \mathbf{Q}_0^x & 0 \\ 0 & 1 & 0 & \mathbf{Q}_0^y\end{bmatrix}$ and $\mathbf{Q}_0 = \begin{bmatrix}\mathbf{Q}_0^x \\ \mathbf{Q}_0^y\end{bmatrix}$ is the control

vector of normalized template contour. (A. Blake and M. Isard, Active Contours, Springer, Chapter 3-4, pp. 41-96, 1998; available on-line: http://research.microsoft.com/~ablake/contours/).
For the edge model,

$$p_{edge}(\mathbf{z}) = \frac{1}{M_{edge}}\sum_{j=1}^{M_{edge}}N(\mathbf{z}; \mathbf{\mu}_{edge,j}, \Sigma)$$

where $\mathbf{\mu}_{edge} = \begin{bmatrix}\mathbf{u}_{edge} \\ \mathbf{v}_{edge}\end{bmatrix}$, $\mathbf{u}_{edge}$ is the spatial position of an edge pixel inside the object contour and $\mathbf{v}_{edge}$ is the orientation of that edge pixel. All edge pixels inside object contour are ranked according to their gradient magnitude and top fraction of edge pixels are selected to be used in edge model.

So for edge-based obj ect model $p_o(\mathbf{z}) = \sum_{j=1}^{M}\omega_j N(\mathbf{z}; \mathbf{\mu}_j, \Sigma)$ where $M = M_{con} + M_{edge}$,

$$\{\omega_j\}_{j=1}^{M} = \left\{\left\{\frac{\pi_{con}}{M_{con}}\right\}_{j=1}^{M_{con}}, \left\{\frac{\pi_{edge}}{M_{edge}}\right\}_{j=1}^{M_{edge}}\right\}, \{\mathbf{\mu}_j\}_{j=1}^{M} = \left\{\{\mathbf{\mu}_{con,j}\}_{j=1}^{M_{con}}, \{\mathbf{\mu}_{edge,j}\}_{j=1}^{M_{edge}}\right\}.$$

A clutter model $p_c(\mathbf{z})$ is used to assimilate the measurements not from objects. A uniform density is used in the clutter model so

$$p_c(\mathbf{z}) = \frac{1}{V_u \times V_v}$$

where $V_u$ is the volume of the validation region and $V_v$ is the volume of the feature space without validation (Y. Bar-Shalom, "Tracking methods in a multitarget environment," IEEE Transactions on Automatic Control, vol. 23, no. 4, pp. 618-626, 1978), e.g., for edge features using edge orientation $V_v = \frac{1}{2\pi}$.

To explain measurements from more than one object, a generative model includes transformed mixture models of all objects, a clutter model and background model if available. The clutter model and background model are optional. The generative model can be written as

$$p(\mathbf{z} \mid \mathbf{X}, \mathbf{\Pi}) = \pi_c p_c(\mathbf{z}) + \pi_b p_b(\mathbf{z}) + \sum_{l=1}^{L} \pi_l p_l(\mathbf{z} \mid \mathbf{X}_l)$$

where $\mathbf{X}(t) = \left\{\mathbf{X}_l(t)\right\}_{l=1}^{L}$ includes the state vectors of $L$ objects, $\mathbf{\Pi} = \left\{\left\{\pi_l\right\}_{l=1}^{L}, \pi_c, \pi_b\right\}$, $\pi_l$ is the mixture weight of the $l$ th object mixture model, $\pi_c$ is the mixture weight of the clutter model, $\pi_b$ is the mixture weight of the background mixture model and $\pi_c + \pi_b + \sum_{l=1}^{L} \pi_l = 1$ (mixture weights were initialized as $\pi_c = 1.0 - 0.05 \times L$, $\pi_b = 0.0$ and $\pi_l = 0.05$ in experiments). $p_l(\mathbf{z} \mid \mathbf{X}_l) = \sum_{j=1}^{M_l} \omega_{l,j} p(\mathbf{z} \mid T(\mathbf{\theta}_{l,j}, \mathbf{X}_l))$ is the transformed $l$ th object model under transformation $T(\theta, \mathbf{X}_l)$ representing motion of the object between the images, $M_l$ is the number of densities in the $l$ th object mixture model and $\omega_{l,j}$, $\theta_{l,j}$ is the mixture weight and parameter of the $j$ th density in the $l$ th object mixture model,

$$p_b(\mathbf{z}) = \sum_{j=1}^{M_b} \omega_{b,j} p(\mathbf{z} \mid \mathbf{\theta}_{b,j})$$ is the background model if available, $M_b$ is the number of densities in the background mixture model, and $\omega_{b,j}$, $\theta_{b,j}$ is the mixture weight and parameter of the $j$ th density in the background mixture model.

According to the embodiment, for each of L objects in a sequence of images, the respective edge-based object model $p_o(\mathbf{z}) = \pi_{con} p_{con}(\mathbf{z}) + \pi_{edge} p_{edge}(\mathbf{z})$ is inserted into the generative model (o=1).

Assuming measurements $\mathbf{Z}$ are drawn independently from the generative model $p(\mathbf{z} \mid \mathbf{X}, \mathbf{\Pi})$, the likelihood given the incomplete data $\mathbf{Z}$ is given by

$$p(\mathbf{Z} \mid \mathbf{X}, \mathbf{\Pi}) = \prod_{i=1}^{N} p(\mathbf{z}_i \mid \mathbf{X}, \mathbf{\Pi}) = \prod_{i=1}^{N} \left[ \pi_c p_c(\mathbf{z}_i) + \pi_b p_b(\mathbf{z}_i) + \sum_{l=1}^{L} \pi_l p_l(\mathbf{z}_i \mid \mathbf{X}_l) \right]$$

$$(3.3.1)$$

A more practical likelihood is to incorporate measurement weight described above:

$$p(\mathbf{Z} \mid \mathbf{X}, \mathbf{\Pi}) = \prod_{i=1}^{N} p(\mathbf{z}_i \mid \mathbf{X}, \mathbf{\Pi})^{\alpha_i} = \prod_{i=1}^{N} \left[ \pi_c p_c(\mathbf{z}_i) + \pi_b p_b(\mathbf{z}_i) + \sum_{l=1}^{L} \pi_l p_l(\mathbf{z}_i \mid \mathbf{X}_l) \right]^{\alpha_i}$$

where $\alpha_i$ is weight for $i$ th measurement.

For the purpose of subsequent optimisation, the missing data of association of measurements with densities will be introduced, denoted as $\mathbf{K} = \left\{\mathbf{k}_i\right\}_{i=1}^N$ and $\mathbf{k}_i = \{k_i^1, k_i^2\}$ where $k_i^1 \in \{1, \cdots, L, c, b\}$, $k_i^1 = c$ indicates the association with clutter, $k_i^1 = b$ association with background and $k_i^1 = l, l \in \{1, \cdots, L\}$ association with object $l$; $k_i^2 \in \{1, \cdots M_{k_i^1}\}$ gives the association with one of the mixture densities in $k_i^1$ model.

The gating procedure of Probabilistic Data Association (PDA) is first applied. A validation region is computed based on the predicted state vector using dynamical model (1.1) for each object so only measurements from within the validation region of the predicted state vector are used (Y. Bar-Shalom, "Tracking methods in a multitarget environment," IEEE Transactions on Automatic Control, vol. 23, no. 4, pp. 618-626, 1978).

For multiple-object tracking, the clustering procedure from Joint Probabilistic Data Association (JPDA) is then employed (T. Fortmann, Y. Bar-Shalom and M. Scheffe, "Sonar tracking of multiple targets using joint probabilistic data association," IEEE Journal of Oceanic Engineering, vol. 8, no. 3, pp. 173-183, 1983). Multiple objects are first grouped into clusters and then are tracked jointly in each cluster. Two objects are grouped into the same cluster if there are a large number of measurements in common in their validation regions, such that the percentage of shared measurements to number of measurements of either one is above a given threshold. It often occurs if there are occlusions between objects. After clustering, measurements in validation regions of all objects in a cluster are used for jointly tracking multiple objects in that cluster.

Optimisation follows the gating and clustering. Various optimisation techniques are possible, as described below.

Described below is multiple-object tracking with optimisation using EM algorithm.

State vector x(t) is estimated by either Maximum Likelihood (ML) estimation or Maximum a Posteriori (MAP) estimation (both well-known general techniques - see for example http://en.wikipedia.org/wiki/Maximum a posteriori or http://webcourse.cs.technion.ac.il/236875/Sprine2006/ho/WCFiless/Tutorial3 New.ppt) using the Expectation-Maximization algorithm (A. Dempster, N. Laird, and D. Rubin, "Maximum likelihood from incomplete data via the EM algorithm," Journal of the Royal Statistical Society Series B, vol. 39, no. 1, pp. 1-38, 1977) and its variation (R. M. Neal and G. E. Hinton, "A new view of the EM algorithm that justifies incremental, sparse and other variants," Learning in Graphical Models, pp. 355-368, 1998).

For multiple-object tracking,

$$p(\mathbf{X}(t) \mid \mathbf{X}(t-1)) = \prod_{l=1}^L p(\mathbf{X}_l(t) \mid \mathbf{X}_l(t-1)) \qquad (5.1.1)$$

where $\mathbf{X}(t) = \left\{\mathbf{X}_l(t)\right\}_{l=1}^L$ includes the state vectors of all objects in a cluster, L is the number of objects in the cluster, $p(\mathbf{X}_l(t) \mid \mathbf{X}_l(t-1))$ can be obtained from the dynamical model (1.1).

The objective function for ML estimation is defined as

$$E_{ML}(\mathbf{Q}(t), \mathbf{X}(t), \mathbf{\Pi}(t))$$

$$= \sum_{i=1}^N \alpha_i \left[ \begin{array}{l} q_{i,c}(t)\log p_c(\mathbf{z}_i) + q_{i,b}(t)\log p_b(\mathbf{z}_i) + \sum_{l=1}^L \sum_{j=1}^{M_l} q_{i,l,j}(t)\log p(\mathbf{z}_i \mid T(\mathbf{\theta}_{l,j}, \mathbf{X}_l(t))) \\ + q_{i,c}(t)\log \dfrac{\pi_c(t)}{q_{i,c}(t)} + q_{i,b}(t)\log \dfrac{\pi_b(t)}{q_{i,b}(t)} + \sum_{l=1}^L \sum_{j=1}^{M_l} q_{i,l,j}(t)\log \dfrac{\pi_l(t)\omega_{l,j}}{q_{i,l,j}(t)} \end{array} \right]$$

$$(5.1.2)$$

The objective function for MAP estimation is

$$E_{MAP}(\mathbf{Q}(t), \mathbf{X}(t), \mathbf{\Pi}(t))$$
$$= E_{ML}(\mathbf{Q}(t), \mathbf{X}(t), \mathbf{\Pi}(t)) + \log p(\mathbf{X}(t)\,|\,\mathbf{Z}(0), \cdots, \mathbf{Z}(t-1)) + \log p(\mathbf{\Pi}(t)\,|\,\mathbf{Z}(0), \cdots, \mathbf{Z}(t-1))$$

$$(5.1.3)$$

where $\quad \mathbf{Q} = \left\{ q_{i,c}, q_{i,b}, \left\{ \left\{ q_{i,l,j} \right\}_{j=1}^{M_l} \right\}_{l=1}^{L} \right\}_{i=1}^{N} \quad$ and $\quad q_{i,c} = p(k_i^1 = c)$,

$q_{i,b} = p(k_i^1 = b)$, $q_{i,l,j} = p(k_i^1 = l, k_i^2 = j)$ is the association weight.

For the E-step, given fixed $\mathbf{X}^{(k-1)}$, maximize $E_{ML}(\mathbf{Q}(t), \mathbf{X}(t), \mathbf{\Pi}(t))$ or $E_{MAP}(\mathbf{Q}(t), \mathbf{X}(t), \mathbf{\Pi}(t))$.

$$\text{If } T(\mathbf{u}_{l,j}, \mathbf{X}_l(t)) = \mathbf{W}_{l,j}\mathbf{x}_l(t) \text{ where } \mathbf{W}_{l,j} = \begin{bmatrix} 1 & 0 & \dfrac{x_{l,j} - \hat{x}_l(t-1)}{\hat{a}_l(t-1)} & 0 \\ 0 & 1 & 0 & \dfrac{y_{l,j} - \hat{y}_l(t-1)}{\hat{b}_l(t-1)} \end{bmatrix},$$

optimal association weights $\mathbf{Q}^{(k)}$ are given by

$$q_{i,c}^{(k)} \propto \pi_c^{(k-1)} p_c(\mathbf{z}_i)$$

$$q_{i,b}^{(k)} \propto \pi_b^{(k-1)} p_b(\mathbf{z}_i)$$

$$q_{i,l,j}^{(k)} \propto \pi_l^{(k-1)} \omega_{l,j} N(\mathbf{u}_i; \mathbf{W}_{l,j}\mathbf{x}_l^{(k-1)}(t), \Sigma_u) N(\mathbf{v}_i; \mathbf{v}_{l,j}, \Sigma_v)$$

$$q_{i,c}^{(k)} + q_{i,b}^{(k)} + \sum_{l=1}^{L}\sum_{j=1}^{M_l} q_{i,l,j}^{(k)} = 1, i = 1 \cdots N \qquad (5.1.4)$$

For the M-step, given fixed association weights $\mathbf{Q}^{(k)}$, maximize $E_{ML}(\mathbf{Q}(t), \mathbf{X}(t), \mathbf{\Pi}(t))$ or $E_{MAP}(\mathbf{Q}(t), \mathbf{X}(t), \mathbf{\Pi}(t))$. At iteration $k$ state vector $\mathbf{x}(t)$ is estimated by

$$\mathbf{x}_{ML,l}^{(k)}(t) = \left[ \sum_{j=1}^{M_l} \mathbf{W}_{l,j}{}^T \widetilde{\Sigma}_{l,j}^{(k)^{-1}} \mathbf{W}_{l,j} \right]^{-1} \left[ \sum_{j=1}^{M_l} \mathbf{W}_{l,j}{}^T \widetilde{\Sigma}_{l,j}^{(k)^{-1}} \widetilde{\mathbf{u}}_{l,j}^{(k)} \right] \qquad (5.1.5)$$

or

$$\mathbf{x}_{MAP,l}^{(k)}(t) = \left[ \sum_{j=1}^{M_l} \mathbf{W}_{l,j}{}^T \widetilde{\Sigma}_{l,j}^{(k)^{-1}} \mathbf{W}_{l,j} + \widetilde{\mathbf{P}}_l^{-1}(t) \right]^{-1} \left[ \sum_{j=1}^{M_l} \mathbf{W}_{l,j}{}^T \widetilde{\Sigma}_{l,j}^{(k)^{-1}} \widetilde{\mathbf{u}}_{l,j}^{(k)} + \widetilde{\mathbf{P}}_l^{-1}(t)\widetilde{\mathbf{x}}_l(t) \right]$$

$$(5.1.6)$$

where $\tilde{\mathbf{x}}_l(t)$ and $\tilde{\mathbf{P}}_l(t)$ are the predicted state vector and covariance of $l$ th object respectively, $\tilde{\mathbf{u}}_{l,j}^{(k)} = \dfrac{\displaystyle\sum_{i=1}^{N} \alpha_i q_{i,l,j}^{(k)} \mathbf{u}_i}{\displaystyle\sum_{i=1}^{N} \alpha_i q_{i,l,j}^{(k)}}$

is the synthetic measurement and $\tilde{\Sigma}_{l,j}^{(k)} = \dfrac{\Sigma_u}{\displaystyle\sum_{i=1}^{N} \alpha_i q_{i,l,j}^{(k)}}$ is the synthetic covariance.

Define the dynamical model of $\Pi$ using the Dirichlet function as

$$p(\Pi(t) \mid \Pi(t-1)) = Dir\left(\pi_c(t), \pi_b(t), \{\pi_l(t)\}_{l=1}^{L}; \rho\pi_c(t-1), \rho\pi_b(t-1), \{\rho\pi_l(t-1)\}_{l=1}^{L}\right)$$

where $Dir(x)$ is the Dirichlet distribution and $\rho$ is a constant.
So

$$p(\Pi(t) \mid \mathbf{Z}(0), \cdots, \mathbf{Z}(t-1)) \approx Dir\left(\pi_c(t), \pi_b(t), \{\pi_l(t)\}_{l=1}^{L}; \rho\hat{\pi}_c(t-1), \rho\hat{\pi}_b(t-1), \{\rho\hat{\pi}_l(t-1)\}_{l=1}^{L}\right)$$

(5.1.7)

where $\hat{\Pi}(t-1) = \left\{\hat{\pi}_c(t-1), \hat{\pi}_b(t-1), \{\hat{\pi}_l(t-1)\}_{l=1}^{L}\right\}$ is the estimation of model mixture weights at $t$ - 1. At iteration $k$ mixture weights $\Pi$ are estimated by

$$\pi_{ML,c}^{(k)}(t) \propto \sum_{i=1}^{N} \alpha_i w_{i,c}^{(k)}, \quad \pi_{ML,b}^{(k)}(t) \propto \sum_{i=1}^{N} \alpha_i q_{i,b}^{(k)}, \quad \pi_{ML,l}^{(k)}(t) \propto \sum_{i=1}^{N} \sum_{j=1}^{M_l} \alpha_i q_{i,l,j}^{(k)}, l = 1, \cdots, L$$

$$\pi_{ML,c}^{(k)}(t) + \pi_{ML,b}^{(k)}(t) + \sum_{l=1}^{L} \pi_{ML,l}^{(k)}(t) = 1 \qquad (5.1.8)$$

or

$$\pi_{MAP,c}^{(k)}(t) \propto \frac{\sum_{i=1}^{N} \alpha_i q_{i,c}^{(k)} - 1}{\rho} + \hat{\pi}_c(t-1), \ \pi_{MAP,b}^{(k)}(t) \propto \frac{\sum_{i=1}^{N} \alpha_i q_{i,b}^{(k)} - 1}{\rho} + \hat{\pi}_b(t-1) \ ,$$

$$\pi_{MAP,l}^{(k)}(t) \propto \frac{\sum_{i=1}^{N}\sum_{j=1}^{M_l} \alpha_i q_{i,l,j}^{(k)} - 1}{\rho} + \hat{\pi}_l(t-1), l = 1, \cdots, L$$

$$\pi_{MAP,c}^{(k)}(t) + \pi_{MAP,b}^{(k)}(t) + \sum_{l=1}^{L} \pi_{MAP,l}^{(k)}(t) = 1 \qquad\qquad (5.1.9)$$

Note that although mixture weights $\Pi(t)$ can be jointly updated with state vector x(t) at each iteration of the EM algorithm, in practice only x(t) is updated in each iteration. $\Pi(t)$ is jointly updated with state vector x(t) in the last iteration of the EM algorithm.

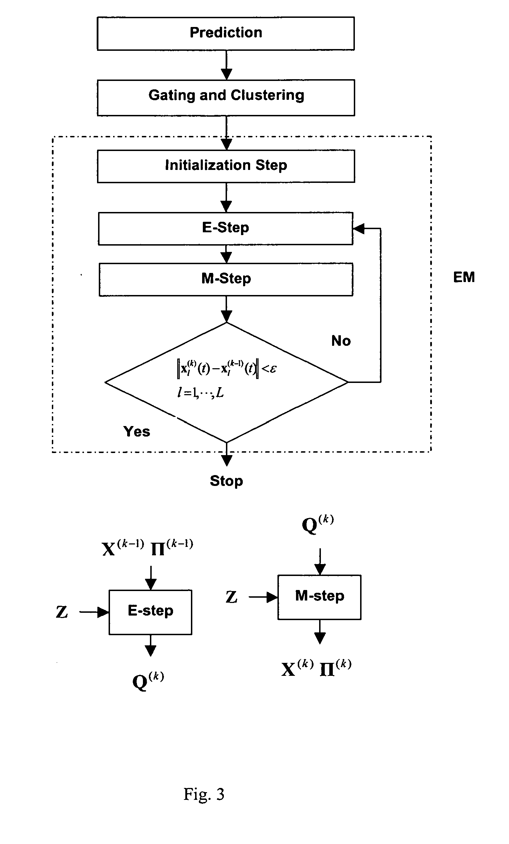

The main stages of multiple-object tracking with the EM algorithm are as follows and are shown in Figure 3:

1. Predict $\tilde{\mathbf{X}}(t)$ using equation (5.1.1) and $\tilde{\Pi}(t) = \hat{\Pi}(t-1)$
2. Gating and clustering
3. Expectation-Maximization

- Initialization *step k* = 0 , $\mathbf{X}^{(0)}(t) = \tilde{\mathbf{X}}(t)$ and $\Pi^{(0)}(t) = \tilde{\Pi}(t)$
- E-step by equation (5.1.4)
- M-step by equation (5.1.5), (5.1.8) for ML estimation or equation (5.1.6), (5.1.9) for MAP estimation

- If $\left\| \mathbf{x}_l^{(k)}(t) - \mathbf{x}_l^{(k-1)}(t) \right\| < \varepsilon, l = 1, \cdots, L,$

  then $\ddot{\mathbf{X}}(t) = \mathbf{X}^{(k)}(t)$, $\hat{\Pi}(t) = \Pi^{(k)}(t)$ and stop

  otherwise $k = k + 1$, $\mathbf{X}_l^{(k)}(t) = \begin{bmatrix} \mathbf{x}_l^{(k)}(t) \\ \hat{\mathbf{x}}_l(t-1) \end{bmatrix}$, $l = 1, \cdots, L$ and go to E-step

Described below is multiple-object tracking with optimisation using variational inference

Variational inference approximates the posterior $p(\mathbf{X}(t)|\mathbf{Z}(0),\cdots, \mathbf{Z}(t))$ with a simpler distribution $q(\mathbf{X}(t))$ by minimizing the KL divergence between the two. Multiple-object tracking with variational inference is based on a reversed EM-like algorithm (T. P. Minka, "Using lower bounds to approximate integrals," Tutorial Note, 1999).

$$\text{Given } p(\mathbf{X}(t-1)|\mathbf{Z}(0),\cdots,\mathbf{Z}(t-1)) = \prod_{l=1}^{L} N(\mathbf{X}_l(t-1); \hat{\mathbf{X}}_l(t-1), \hat{\mathbf{P}}_l(t-1)) \ ,$$

$$p(\mathbf{X}(t)|\mathbf{Z}(0),\cdots,\mathbf{Z}(t-1)) = \prod_{l=1}^{L} N(\mathbf{X}_l(t); \tilde{\mathbf{X}}_l(t), \tilde{\mathbf{P}}_l(t)) \qquad\qquad (5.2.1)$$

where $\tilde{\mathbf{X}}_l(t) = \mathbf{A}_l \hat{\mathbf{X}}_l(t-1)$, $\tilde{\mathbf{P}}_l(t) = \mathbf{A}_l \hat{\mathbf{P}}_l(t-1)\mathbf{A}_l^T + \mathbf{B}_l\mathbf{B}_l^T$ are the predicted mean and covariance of the *l* th object respectively. A, and B, are the parameters in dynamical model of *l* th object respectively.

Define objective function

$$E(q(\mathbf{X}(t)), q(\mathbf{\Pi}(t)), \mathbf{Q}) = \int q(\mathbf{X}(t)) q(\mathbf{\Pi}(t)) \log g(\mathbf{X}(t), \mathbf{\Pi}(t), \mathbf{Q}) d\mathbf{X}(t) d\mathbf{\Pi}(t)$$

$$- \int q(\mathbf{X}(t)) \log q(\mathbf{X}(t)) d\mathbf{X}(t) - \int q(\mathbf{\Pi}(t)) \log q(\mathbf{\Pi}(t)) d\mathbf{\Pi}(t)$$

$$(5.2.2)$$

where

$$g(\mathbf{X}(t), \mathbf{\Pi}(t), \mathbf{Q}) = \prod_{i=1}^{N} \left[ \frac{\pi_c(t) p_c(\mathbf{z}_i(t))}{q_{i,c}} \right]^{\alpha_i q_{i,c}} \left[ \frac{\pi_b(t) p_b(\mathbf{z}_i(t))}{q_{i,b}} \right]^{\alpha_i q_{i,b}} \prod_{l=1}^{L} \prod_{j=1}^{M_l} \left[ \frac{\pi_l(t) \omega_{l,j} p(\mathbf{z}_i(t) \mid T(\mathbf{\theta}_{l,j}, \mathbf{X}_l(t)))}{q_{i,l,j}} \right]^{\alpha_i q_{i,l,j}}$$

$$p(\mathbf{X}(t) \mid \mathbf{Z}(0), \cdots, \mathbf{Z}(t-1)) p(\mathbf{\Pi}(t) \mid \mathbf{Z}(0), \cdots, \mathbf{Z}(t-1))$$

In the E-step, given $Q^{(k)}$, maximize $E(q(\mathbf{X}(t)), q(\Pi(t)), Q)$. If $T(\mathbf{u}_{l,j}, \mathbf{X}_l(t)) = \mathbf{W}_{l,j} \mathbf{H} \mathbf{X}_l(t)$ where $\mathbf{H} = [\mathbf{I}\ 0]$, at iteration $k$ the posterior of state vector $\mathbf{X}(t)$ can be approximated as

$$q^{(k)}(\mathbf{X}(t)) = \prod_{l=1}^{L} N(\mathbf{X}_l(t); \mathbf{X}_l^{(k)}(t), \mathbf{P}_l^{(k)}(t))$$

$$(5.2.3)$$

where

$$\mathbf{X}_l^{(k)}(t) = \left[ \sum_{j=1}^{M_l} \mathbf{H}^T \mathbf{W}_{l,j}^T \widetilde{\mathbf{\Sigma}}_{l,j}^{(k)-1} \mathbf{W}_{l,j} \mathbf{H} + \widetilde{\mathbf{P}}_l^{-1}(t) \right]^{-1} \left[ \sum_{j=1}^{M_l} \mathbf{H}^T \mathbf{W}_{l,j}^T \widetilde{\mathbf{\Sigma}}_{l,j}^{(k)-1} \widetilde{\mathbf{u}}_{l,j}^{(k)} + \widetilde{\mathbf{P}}_l^{-1}(t) \widetilde{\mathbf{X}}_l(t) \right]$$

,

$$\mathbf{P}_l^{(k)}(t) = \left[ \sum_{j=1}^{M_l} \mathbf{H}^T \mathbf{W}_{l,j}^T \widetilde{\mathbf{\Sigma}}_{l,j}^{(k)-1} \mathbf{W}_{l,j} \mathbf{H} + \widetilde{\mathbf{P}}_l^{-1}(t) \right]^{-1} ,$$

$$\widetilde{\mathbf{u}}_{l,j}^{(k)} = \frac{\sum_{i=1}^{N} \alpha_i q_{i,l,j}^{(k)} \mathbf{u}_i}{\sum_{i=1}^{N} \alpha_i q_{i,l,j}^{(k)}} \text{ is the synthetic measurement} \qquad \widetilde{\mathbf{\Sigma}}_{l,j}^{(k)} = \frac{\mathbf{\Sigma}_u}{\sum_{i=1}^{N} \alpha_i q_{i,l,j}^{(k)}} \text{ is the synthetic covariance.}$$

As

$$p(\mathbf{\Pi}(t) \mid \mathbf{Z}(0), \cdots, \mathbf{Z}(t-1)) \approx Dir\left( \pi_c(t), \pi_b(t), \{\pi_l(t)\}_{l=1}^{L}; \rho\hat{\pi}_c(t-1), \rho\hat{\pi}_b(t-1), \{\rho\hat{\pi}_l(t-1)\}_{l=1}^{L} \right)$$

$$(5.2.4)$$

at iteration $k$ the posterior of mixture weights $\Pi(t)$ can be jointly approximated as

$$q^{(k)}(\mathbf{\Pi}(t)) = Dir\left(\pi_c(t), \pi_b(t), \{\pi_l(t)\}_{l=1}^{L}; \sum_{i=1}^{N}\alpha_i q_{i,c}^{(k)} + \rho\hat{\pi}_c(t-1), \sum_{i=1}^{N}\alpha_i q_{i,b}^{(k)} + \rho\hat{\pi}_b(t-1), \left\{\sum_{i=1}^{N}\sum_{j=1}^{M_l}\alpha_i q_{i,l,j}^{(k)} + \rho\hat{\pi}_l(t-1)\right\}_{l=1}^{L}\right)$$

$$(5.2.5)$$

In the M-step, given $q^{(k-1)}(\mathbf{X}(t))$ and $q^{(k-1)}(\Pi(t))$, maximize $E(q(\mathbf{X}(t)), q(\Pi(t)), \mathbf{Q})$ and it can be shown that

$$q_{i,c}^{(k)} \propto \pi_c^{(k-1)} p_c(\mathbf{z}_i)$$

$$q_{i,b}^{(k)} \propto \pi_b^{(k-1)} p_b(\mathbf{z}_i)$$

$$q_{i,l,j}^{(k)} \propto \pi_l^{(k-1)} \omega_{l,j} N(\mathbf{u}_i; \mathbf{W}_{l,j}\mathbf{H}\mathbf{X}_l^{(k-1)}(t), \mathbf{\Sigma}_u) N(\mathbf{v}_i; \mathbf{v}_{l,j}, \mathbf{\Sigma}_v)$$

$$\exp\left[-\frac{1}{2}Tr\left[\mathbf{H}^T\mathbf{W}_{l,j}^T\mathbf{\Sigma}_u^{-1}\mathbf{W}_{l,j}\mathbf{H}\mathbf{P}_l^{(k-1)}(t)\right]\right]$$

$$q_{i,c}^{(k)} + q_{i,b}^{(k)} + \sum_{l=1}^{L}\sum_{j=1}^{M_l}q_{i,l,j}^{(k)} = 1, i = 1\cdots N$$

$$(5.2.6)$$

where

$$\pi_c^{(k-1)} \propto \exp\left[\Psi\left(\sum_{i=1}^{N}\alpha_i q_{i,c}^{(k-1)} + \rho\hat{\pi}_c(t-1)\right) - \Psi(\rho + N)\right]$$

$$\pi_b^{(k-1)} \propto \exp\left[\Psi\left(\sum_{i=1}^{N}\alpha_i q_{i,b}^{(k-1)} + \rho\hat{\pi}_b(t-1)\right) - \Psi(\rho + N)\right]$$

$$\pi_l^{(k-1)} \propto \exp\left[\Psi\left(\sum_{i=1}^{N}\sum_{j=1}^{M_l}\alpha_i q_{i,l,j}^{(k-1)} + \rho\hat{\pi}_l(t-1)\right) - \Psi(\rho + N)\right]$$

$$\pi_c^{(k-1)} + \pi_b^{(k-1)} + \sum_{l=1}^{L}\pi_l^{(k-1)} = 1$$

and $\Psi(x)$ is the digamma function.

With variational inference, $p(\mathbf{X}(t)|\mathbf{Z}(0),\cdots, \mathbf{Z}(t))$ is then approximated by a Gaussian $q(\mathbf{X}(t))$. Although $q(\Pi(t)$ can be jointly updated with $q(\mathbf{X}(t))$ at each iteration of variational inference, in practice only $q(\mathbf{X}(t))$ is updated in each iteration. $q(\Pi(t))$ is jointly updated with $q(\mathbf{X}(t))$ in the last iteration of the variational inference.

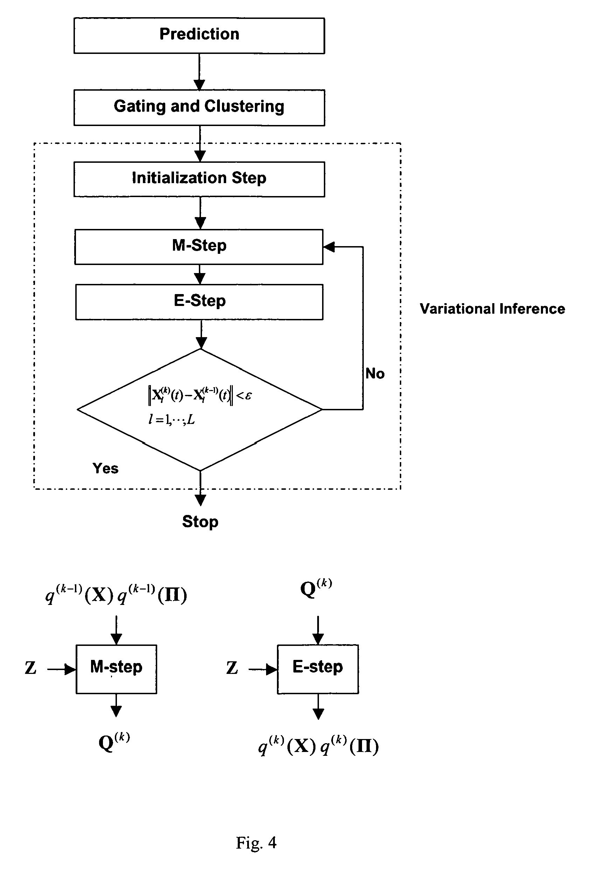

The main stages of multiple-object tracking with variational inference are as follows and are shown in Figure 4:

1. Predict $p(\mathbf{X}(t)|\mathbf{Z}(0),\cdots, \mathbf{Z}(t-1))$ by equation (5.2.1) and $p(\Pi(t)|\mathbf{Z}(0),\cdots, \mathbf{Z}(t-1))$ by equation (5.2.4)
2. Gating and clustering
3. Variational Inference

   • Initialization step $k = 1$,

$$q^{(0)}(\mathbf{X}(t)) \simeq p(\mathbf{X}(t)|\mathbf{Z}(0),\cdots,\mathbf{Z}(t-1)),$$

$$q^{(0)}(\Pi(t)) = p(\Pi(t) \mid \mathbf{Z}(0), \cdots, \mathbf{Z}(t-1)), \Pi^{(0)}(t) = \hat{\Pi}(t-1)$$

- M-step by equation (5.2.6)
- E-step by equation (5.2.3), (5.2.5)

- If $\left\| \mathbf{X}_l^{(k)}(t) - \mathbf{X}_l^{(k-1)}(t) \right\| < \varepsilon, l = 1, \cdots, L,$

  then

$$p(\mathbf{X}(t) \mid \mathbf{Z}(0), \cdots, \mathbf{Z}(t)) = q^{(k)}(\mathbf{X}(t)),$$

$$p(\Pi(t) \mid \mathbf{Z}(0), \cdots, \mathbf{Z}(t)) = q^{(k)}(\Pi(t))$$

  and stop otherwise $k = k + 1$ and go to M-step

Described below is multiple-object tracking with optimisation using variational particle filter (also known as "Variational Importance Sampling Particle Filter").

Particle filter provides a probabilistic framework for tracking. In a particle filter, a set of particles $\left\{ (\mathbf{X}^{(n)}(t), w^{(n)}(t)) \right\}_{n=1}^{N_p}$ is used to approximate the posterior. For multiple-object tracking using particle filters, the number of particles grows rapidly with the number of objects due to the high dimensional state vector. As variational inference is an effective and efficient approximation of posterior, variational particle filter is proposed for multiple-object tracking. The basic idea is to generate samples from a proposal distribution based on variational inference, so that the number of particles needed for multiple-object tracking can be significantly reduced.

Given a set of particles $\left\{ (\mathbf{X}^{(n)}(t-1), w^{(n)}(t-1)) \right\}_{n=1}^{N_p}$ to approximate $p(\mathbf{X}(t-1) \mid \mathbf{Z}(0), \cdots, \mathbf{Z}(t-1))$,

$$p(\mathbf{X}(t) \mid \mathbf{Z}(0), \cdots, \mathbf{Z}(t-1)) = \sum_{n=1}^{N_p} w^{(n)}(t-1) \prod_{l=1}^{L} N(\mathbf{X}_l^1(t); \widetilde{\mathbf{x}}_l^{(n)}(t), \widetilde{\mathbf{P}}_l^{(n)}(t)) \delta(\mathbf{X}_l^2(t) - \mathbf{X}_l^{1,(n)}(t-1))$$

$$(5.3.1)$$

where $\mathbf{X}_l^1(t) = \mathbf{x}_l(t)$, $\mathbf{X}_l^2(t) = \mathbf{x}_l(t-1)$ are partitioned state vectors of $\mathbf{X}_l(t)$,

$\widetilde{\mathbf{x}}_l^{(n)}(t) = \mathbf{A}_{l,1} \mathbf{X}_l^{1,(n)}(t-1) + \mathbf{A}_{l,2} \mathbf{X}_l^{2,(n)}(t-1)$, $\widetilde{\mathbf{P}}_l^{(n)}(t) = \mathbf{B}_{l,0} \mathbf{B}_{l,0}^T$ are the predicted mean and covariance, respectively, of state vector $\mathbf{x}$, $(t)$ in the $n$ th particle. $\mathbf{A}_{l,1}$, $\mathbf{A}_{l,2}$ and $\mathbf{B}_{l,0}$ are the parameters in dynamical model of $l$ th object respectively.

Define objective function

$$E(q(\mathbf{X}(t)), q(\Pi(t)), \mathbf{Q}) = \int q(\mathbf{X}(t)) q(\Pi(t)) \log g(\mathbf{X}(t), \Pi(t), \mathbf{Q}) d\mathbf{X}(t) d\Pi(t)$$

$$- \int q(\mathbf{X}(t)) \log q(\mathbf{X}(t)) d\mathbf{X}(t) - \int q(\Pi(t)) \log q(\Pi(t)) d\Pi(t)$$

$$(5.3.2)$$

where

$$g(\mathbf{X}(t),\mathbf{\Pi}(t),\mathbf{Q}) = \prod_{i=1}^{N}\left[\frac{\pi_c(t)p_c(\mathbf{z}_i(t))}{q_{i,c}}\right]^{\alpha_i q_{i,c}}\left[\frac{\pi_b(t)p_b(\mathbf{z}_i(t))}{q_{i,b}}\right]^{\alpha_i q_{i,b}}\prod_{l=1}^{L}\prod_{j=1}^{M_l}\left[\frac{\pi_l(t)\omega_{l,j}p(\mathbf{z}_i(t)\,|\,T(\mathbf{\theta}_{l,j},\mathbf{X}_l(t)))}{q_{i,l,j}}\right]^{\alpha_i q_{i,l,j}}$$

$$p(\mathbf{X}(t)\,|\,\mathbf{Z}(0),\cdots,\mathbf{Z}(t-1))p(\mathbf{\Pi}(t)\,|\,\mathbf{Z}(0),\cdots,\mathbf{Z}(t-1))$$

In the E-step, given $\mathbf{Q}^{(k)}$, maximize $E(q(\mathbf{X}(t)), q(\Pi(t)), \mathbf{Q})$.

If $T(\mathbf{u}_{l,j},\mathbf{X}_l(t)) = \mathbf{W}_{l,j}\mathbf{X}_l^1(t)$, at iteration $k$ the posterior of state vector $\mathbf{X}(t)$ can be approximated as

$$q^{(k)}(\mathbf{X}(t)) = \sum_{n=1}^{N_p}\varphi^{(n),(k)}(t)\prod_{l=1}^{L}N(\mathbf{X}_l^1(t);\mathbf{x}_l^{(n),(k)}(t),\mathbf{P}_l^{(n),(k)}(t))\delta(\mathbf{X}_l^2(t)-\mathbf{X}_l^{1,(n)}(t-1))$$

$$(5.3.3)$$

where

$$\mathbf{x}_l^{(n),(k)}(t) = \left[\sum_{j=1}^{M_l}\mathbf{W}_{l,j}^T\widetilde{\mathbf{\Sigma}}_{l,j}^{(k)^{-1}}\mathbf{W}_{l,j} + \widetilde{\mathbf{P}}_l^{(n)^{-1}}(t)\right]^{-1}\left[\sum_{j=1}^{M_l}\mathbf{W}_{l,j}^T\widetilde{\mathbf{\Sigma}}_{l,j}^{(k)^{-1}}\widetilde{\mathbf{u}}_{l,j}^{(k)} + \widetilde{\mathbf{P}}_l^{(n)^{-1}}(t)\widetilde{\mathbf{x}}_l^{(n)}(t)\right]$$

,

$$\mathbf{P}_l^{(n),(k)}(t) = \left[\sum_{j=1}^{M_l}\mathbf{W}_{l,j}^T\widetilde{\mathbf{\Sigma}}_{l,j}^{(k)^{-1}}\mathbf{W}_{l,j} + \widetilde{\mathbf{P}}_l^{(n)^{-1}}(t)\right]^{-1},$$

$$\varphi^{(n),(k)}(t) = w^{(n)}(t-1)\prod_{l=1}^{L}\frac{\left|\mathbf{P}_l^{(n),(k)}(t)\right|^{\frac{1}{2}}}{\left|\widetilde{\mathbf{P}}_l^{(n)}(t)\right|^{\frac{1}{2}}}\exp\left[-\frac{1}{2}\left[\widetilde{\mathbf{x}}_l^{(n)}(t)^T\widetilde{\mathbf{P}}_l^{(n)^{-1}}(t)\widetilde{\mathbf{x}}_l^{(n)}(t) + \sum_{j=1}^{M_l}\widetilde{\mathbf{u}}_{l,j}^{(k)^T}\widetilde{\mathbf{\Sigma}}_{l,j}^{(k)^{-1}}\widetilde{\mathbf{u}}_{l,j}^{(k)} - \mathbf{x}_l^{(n),(k)}(t)^T\mathbf{P}_l^{(n),(k)^{-1}}(t)\mathbf{x}_l^{(n),(k)}(t)\right]\right]$$

and

$$\sum_{n=1}^{N_p}\varphi^{(n),(k)}(t) = 1,$$

At iteration $k$ the posterior of mixture weights $\Pi(t)$ can be approximated by (5.2.5).
In the M-step, given $q^{(k-1)}(X(t))$ and $q^{(k-1)}(\Pi(t))$,
maximize $E(q(X(t)), q(\Pi(t)), Q)$
and it can be shown that

$$q_{i,c}^{(k)} \propto \pi_c^{(k-1)} p_c(\mathbf{z}_i)$$

$$q_{i,b}^{(k)} \propto \pi_b^{(k-1)} p_b(\mathbf{z}_i)$$

$$q_{i,l,j}^{(k)} \propto \pi_l^{(k-1)} \omega_{l,j} N(\mathbf{u}_i \mid \mathbf{W}_{l,j} \overline{\mathbf{x}}_l^{(k-1)}(t), \Sigma_u) N(\mathbf{v}_i \mid \mathbf{v}_{l,j}, \Sigma_v) \qquad (5.3.4)$$

$$\exp\left[ -\frac{1}{2} Tr\left[ \mathbf{W}_{l,j}^T \Sigma_u^{-1} \mathbf{W}_{l,j} (\overline{\mathbf{P}}_l^{(k-1)}(t) + \mathbf{S}_l^{(k-1)}(t)) \right] \right]$$

$$q_{i,c}^{(k)} + q_{i,b}^{(k)} + \sum_{l=1}^{L} \sum_{j=1}^{M_l} q_{i,l,j}^{(k)} = 1, i = 1 \cdots N$$

where

$$\overline{\mathbf{x}}_l^{(k-1)}(t) = \sum_{n=1}^{N_p} \varphi^{(n),(k-1)}(t) \mathbf{x}_l^{(n),(k-1)}(t),$$

$$\mathbf{S}_l^{(k-1)}(t) = \sum_{n=1}^{N_p} \varphi^{(n),(k-1)}(t) \left[ \mathbf{x}_l^{(n),(k-1)}(t) - \overline{\mathbf{x}}_l^{(k-1)}(t) \right] \left[ \mathbf{x}_l^{(n),(k-1)}(t) - \overline{\mathbf{x}}_l^{(k-1)}(t) \right]^T,$$

$$\overline{\mathbf{P}}_l^{(k-1)}(t) = \sum_{n=1}^{N_p} \varphi^{(n),(k-1)}(t) \mathbf{P}_l^{(n),(k-1)}(t),$$

$$\pi_c^{(k-1)} \propto \exp\left[ \Psi\left( \sum_{i=1}^{N} \alpha_i q_{i,c}^{(k-1)} + \rho \hat{\pi}_c(t-1) \right) - \Psi(\rho + N) \right]$$

$$\pi_b^{(k-1)} \propto \exp\left[ \Psi\left( \sum_{i=1}^{N} \alpha_i q_{i,b}^{(k-1)} + \rho \hat{\pi}_b(t-1) \right) - \Psi(\rho + N) \right]$$

$$\pi_l^{(k-1)} \propto \exp\left[ \Psi\left( \sum_{i=1}^{N} \sum_{j=1}^{M_l} \alpha_i q_{i,l,j}^{(k-1)} + \rho \hat{\pi}_l(t-1) \right) - \Psi(\rho + N) \right]$$

$$\pi_c^{(k-1)} + \pi_b^{(k-1)} + \sum_{l=1}^{L} \pi_l^{(k-1)} = 1$$

With variational inference, $p(\mathbf{X}(t) \mid \mathbf{Z}(0),..., \mathbf{Z}(t))$ is approximated by $q(\mathbf{X}(t))$ which is a mixture of $N_p$ Gaussians. Although $q(\Pi(t))$ can be jointly updated with $q(\mathbf{X}(t))$ at each iteration of variational inference, in practice only $q(\mathbf{X}(t))$ is updated in each iteration. $q(\Pi(t))$ is jointly updated with $q(\mathbf{X}(t))$ in the last iteration of the variational inference.

The proposal distribution $I(\mathbf{X}(t))$ is a mixture of prior $p(\mathbf{X}(t) \mathbf{Z}(0), ..., \mathbf{Z}(t-1))$ and $q(\mathbf{X}(t))$,

$$I(\mathbf{X}(t)) = \beta p(\mathbf{X}(t) \mid \mathbf{Z}(0), \cdots, \mathbf{Z}(t-1)) + (1-\beta) q(\mathbf{X}(t)) \qquad (5.3.5)$$

Note that if $\beta=1$, it reduces to the Sampling Importance Resampling (SIR) particle filter. Importance samples are then generated from I(X(t)) and weights are given by

$$w^{(n)}(t) \propto \frac{p(\mathbf{Z}(t) \mid \mathbf{X}(t) = \mathbf{X}^{(n)}(t)) p(\mathbf{X}(t) = \mathbf{X}^{(n)}(t) \mid \mathbf{Z}(0), \cdots, \mathbf{Z}(t-1))}{I(\mathbf{X}(t) = \mathbf{X}^{(n)}(t))}$$

$$(5.3.6)$$

Note that in $p(\mathbf{Z}(t) \mid \mathbf{X}(t) = \mathbf{X}^{(n)}(t))$, other features can be used to evaluate the weights of particles.

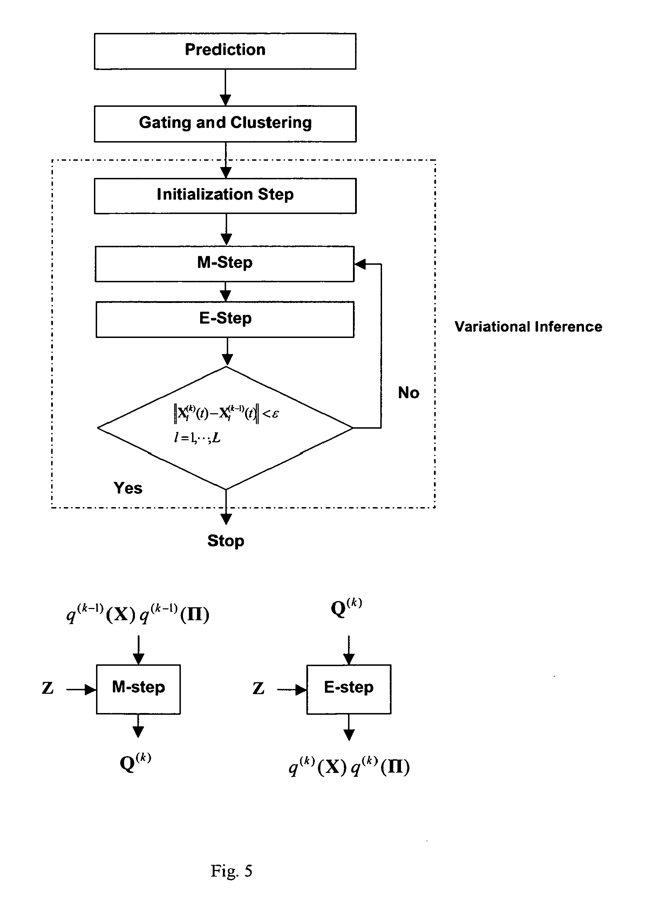

The main stages of multiple-object tracking with the variational particle filter are as follows and are shown in Figure 5:

1. Predict $p(\mathbf{X}(t) \mid \mathbf{Z}(0), \cdots, \mathbf{Z}(t-1))$ by equation (5.3.1) and $p(\Pi(t) \mathbf{Z}(0), \cdots, \mathbf{Z}(t-1))$ by equation (5.2.4)
2. Gating and clustering
3. Variational Inference

- Initialization step $k=1$,

$$q^{(0)}(\mathbf{X}(t)) = p(\mathbf{X}(t) \mid \mathbf{Z}(0), \cdots, \mathbf{Z}(t-1)),$$

$$q^{(0)}(\Pi(t)) = p(\Pi(t) \mid \mathbf{Z}(0), \cdots, \mathbf{Z}(t-1)), \Pi^{(0)}(t) = \hat{\Pi}(t-1)$$

- M-step by equation (5.3.4)
- E-step by equation (5.3.3), (5.2.5)
- If $\left\| \overline{\mathbf{x}}_l^{(k)}(t) - \overline{\mathbf{x}}_l^{(k-1)}(t) \right\| < \varepsilon, l = 1, \cdots, L,$

  then $q(\mathbf{X}(t)) q^{(k)}(\mathbf{X}(t))$, $p(\Pi(t) \mid \mathbf{Z}(0), \cdots, \mathbf{Z}(t)) = q^{(k)}(\Pi(t))$ and go to step 4
  otherwise $k = k+1$ and go to M-step

4. Sampling $\mathbf{X}^{(n)}(t) \sim I(\mathbf{X}(t))$ by equation (5.3.5)
5. Weighting by equation (5.3.6) and $w^{(n)}(t)$ is normalized so

$$\sum_{n=1}^{N_p} w^{(n)}(t) = 1$$

The tracking framework described above using the EM algorithm, variational inference and variational particle filter can be extended to fuse multiple features for multiple-object tracking. Sources of multiple features can be selected from colour, texture or detected feature points using multiple measurement extraction methods. Denote measurements from multiple sources as $\left\{\mathbf{Z}_s\right\}_{s=1}^{N_s}$ where $\mathbf{Z}_s$ is the measurement from the $s$ th source and $N_s$ is the number of sources.

Assuming independent sources of measurements, the likelihood given incomplete data $\left\{\mathbf{Z}_s\right\}_{s=1}^{N_s}$ is

$$p(\{\mathbf{Z}_s\}_{s=1}^{N_s} \mid \mathbf{X}, \{\mathbf{\Pi}_s\}_{s=1}^{N_s}) = \prod_{s=1}^{N_s} p(\mathbf{Z}_s \mid \mathbf{X}, \mathbf{\Pi}_s)$$ and the likelihood given complete data $\left\{\mathbf{Z}_s\right\}_{s=1}^{N_s}$ and $\left\{\mathbf{K}_s\right\}_{s=1}^{N_s}$ is

$$p(\{\mathbf{Z}_s\}_{s=1}^{N_s}, \{\mathbf{K}_s\}_{s=1}^{N_s} \mid \mathbf{X}, \{\mathbf{\Pi}_s\}_{s=1}^{N_s}) = \prod_{s=1}^{N_s} p(\mathbf{Z}_s, \mathbf{K}_s \mid \mathbf{X}, \mathbf{\Pi}_s)$$ where $\mathbf{K}_s$ is the missing data of associations for measurements of the $s$ th source and $\Pi_s$ are the mixture weights of models for the $s$ th source.

In practice, the likelihood used is

$$p(\{\mathbf{Z}_s\}_{s=1}^{N_s} \mid \mathbf{X}, \{\mathbf{\Pi}_s\}_{s=1}^{N_s}) = \prod_{s=1}^{N_s} p(\mathbf{Z}_s \mid \mathbf{X}, \mathbf{\Pi}_s)^{\gamma_s}$$

where $\gamma_s$ is the weight for $s$ th source. A similar tracking framework using EM algorithm, variational inference or variational particle filter can be derived for multiple-feature multiple-object tracking.

It has been found that the combination of the proposed edge-model and generative model, and associated optimisation techniques, give good tracking results. However, other features or combinations of features can also be used with the generative model and optimisation techniques. Also other optimisation techniques can be used such as

- Variants of EM algorithm such as fast EM algorithm or annealed EM by changing covariance using a deterministic annealing scheme in EM algorithm
- Variants of variational inference such as annealed variational inference by changing covariance using a deterministic annealing scheme in variational inference
- Variants of variational particle filter such as annealed variational particle filter by changing covariance using a deterministic annealing scheme in variational inference.

The invention is preferably implemented by processing electrical signals using a suitable apparatus. The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner or video camera or any combination of such components together with additional components. Aspects of the invention can be provided in software and/or hardware form, or in an application-specific apparatus or application-specific modules can be provided, such as chips.

The invention has various applications, such as in a surveillance system.

**Claims**

1. A method of representing an object in an image or sequence of images, by processing signals corresponding to the image or images, using the position and orientation of edge features of the object in the image or images.

2. The method of claim 1 using a contour model of edge features of the object and an edge model of other edge features of the object.

3. The method of claim 1 or claim 2 using a probabilistic model of the edge features.

4. A method of representing an object in an image or sequence of images, by processing signals corresponding to the image or images, using a probabilistic model of edge features.

5. The method of claim 4 using a contour model of edge features of the object and an edge model of other edge features of the object.

6. The method of any of claims 3 to 5 using a non-parametric edge-based probabilistic model.

7. A method of representing an object in an image or sequence of images, by processing signals corresponding to the image or images, using a contour model of edge features of the object and an edge model of other edge features of the object.

8. The method of any of claims 3 to 6 wherein the probabilistic model involves a probability density function representing the likelihood that edge features correspond to an object.

9. The method of claim 8 wherein the probability density function is a sum of functions representing components of an object.

10. The method of claim 8 or claim 9 wherein the probability density function jointly represents a plurality of objects.

11. The method of claim 10 wherein the probability density function comprises a sum of probability density functions corresponding to respective objects.

12. The method of any of claims 3 to 11 wherein the probabilistic model involves a mixture model.

13. The method of claim 12 wherein the probabilistic model involves a mixture of mixture models including at least one object model and optionally a clutter model and/or a background model.

14. The method of any preceding claim for representing a plurality of objects, including assigning an indication of likelihood that features are associated to one or more objects, or one or more components of objects, wherein features may be associated to two or more objects or components of objects.

15. The method of any preceding claim further comprising incorporating a representation of motion of an object or objects in a sequence of images.

16. The method of any preceding claim using a representation of at least one other visual feature in addition to edge features.

17. The method of any preceding claim further comprising analysing features of background to the object or objects.

18. The method of claim 17 comprising weighting measurements with reference to estimates of background features.

19. The method of claim 18 wherein the influence of background features is inversely proportional to their probability, for example, in a histogram representation.

20. The method of any of claims 17 to 19 wherein background features comprise edge features.

21. A method of tracking one or more objects in a sequence of images using a representation derived using the method of any preceding claim.

22. The method of claim 21 for jointly tracking two or more objects.

23. The method of claim 21 or claim 22 comprising optimising an objective function comprising motion transformation to estimate motion of one or more objects in the sequence of images.

24. The method of claim 23 using one or more of the Expectation-Maximization algorithm, variational inference, variational importance sampling, particle filtering, and variants thereof.

25. The method of claim 24 using a combination of particle filtering and variational inference or a combination of particle filtering and variational importance sampling, including variants.

26. A method of jointly tracking two or more objects in a sequence of images, by processing signals corresponding to the image or images, using a probabilistic model jointly representing object features and object motion transformations.

27. The method of claim 26 comprising assigning an indication of likelihood that features are associated to one or more objects or one or more components of objects, wherein features may be associated to two or more objects or components of objects.

28. The method of claim 26 or claim 27 further comprising optimising an objective function to estimate motion.

29. The method of claim 28 wherein said optimising comprises using one or more of the Expectation-Maximization algorithm, variational inference, variational importance sampling, particle filtering, a combination of particle filtering and variational inference or a combination of particle filtering and variational importance sampling, and variants thereof.

30. The method of any of claims 26 to 29 using edge features.

31. Apparatus for executing the method of any preceding claim.

32. Computer-readable storage medium storing a computer program for executing the method of any of claims 1 to 30.

Fig. 1

Fig. 2

```
┌─────────────────────────────┐
│         Prediction          │
└─────────────────────────────┘
              │
              ▼
┌─────────────────────────────┐
│    Gating and Clustering    │
└─────────────────────────────┘
              │
              ▼
┌─────────────────────────────┐
│     Initialization Step     │
└─────────────────────────────┘
              │
              ▼
┌─────────────────────────────┐
│           E-Step            │◄──────┐
└─────────────────────────────┘       │
              │                        │
              ▼                        │
┌─────────────────────────────┐       │
│           M-Step            │       │  EM
└─────────────────────────────┘       │
              │                        │
              ▼                        │
          ╱────────╲                   │
        ╱            ╲      No          │
      ╱  $\left\|\mathbf{x}_l^{(k)}(t) - \mathbf{x}_l^{(k-1)}(t)\right\| < \varepsilon$  ╲──────┘
      ╲  $l = 1, \cdots, L$            ╱
        ╲            ╱
     Yes  ╲────────╱
              │
              ▼
            Stop
```

$$\mathbf{X}^{(k-1)}\ \mathbf{\Pi}^{(k-1)} \qquad\qquad \mathbf{Q}^{(k)}$$

```
                  │                              │
                  ▼                              ▼
        ┌──────────────┐              ┌──────────────┐
  Z ───►│    E-step    │        Z ───►│    M-step    │
        └──────────────┘              └──────────────┘
                  │                              │
                  ▼                              ▼
```

$$\mathbf{Q}^{(k)} \qquad\qquad\qquad \mathbf{X}^{(k)}\ \mathbf{\Pi}^{(k)}$$

Fig. 3

```
┌─────────────────────────────┐
│        Prediction           │
└──────────────┬──────────────┘
               │
               ▼
┌─────────────────────────────┐
│    Gating and Clustering    │
└──────────────┬──────────────┘
```

┌ ─ ─ ─ ─ ─ ─ ─ ─ ─ ─ ─ ─ ─ ─ ─ ─ ─ ─ ┐

```
┌─────────────────────────────┐
│     Initialization Step     │
└──────────────┬──────────────┘
               │
               ▼
┌─────────────────────────────┐
│          M-Step             │◄──────┐
└──────────────┬──────────────┘       │
               │                      │
               ▼                      │
┌─────────────────────────────┐       │
│          E-Step             │       │
└──────────────┬──────────────┘       │
               │                      │
               ▼                      │    No
```

**Variational Inference**

$$\left\| \mathbf{X}_l^{(k)}(t) - \mathbf{X}_l^{(k-1)}(t) \right\| < \varepsilon$$
$$l = 1, \cdots, L$$

**Yes**

└ ─ ─ ─ ─ ─ ─ ─ ─ ─ ─ ─ ─ ─ ─ ─ ─ ─ ─ ┘

**Stop**

$q^{(k-1)}(\mathbf{X})\, q^{(k-1)}(\mathbf{\Pi})$ $\qquad\qquad \mathbf{Q}^{(k)}$

$\mathbf{Z} \longrightarrow$ **M-step** $\qquad\qquad \mathbf{Z} \longrightarrow$ **E-step**

$\mathbf{Q}^{(k)} \qquad\qquad\qquad q^{(k)}(\mathbf{X})\, q^{(k)}(\mathbf{\Pi})$

Fig. 4

Prediction

↓

Gating and Clustering

↓

Initialization Step

↓

M-Step

↓

E-Step

↓

$$\left\| \mathbf{X}_l^{(k)}(t) - \mathbf{X}_l^{(k-1)}(t) \right\| < \varepsilon$$
$$l = 1, \cdots, L$$

No

Yes

Variational Inference

Stop

$q^{(k-1)}(\mathbf{X})\, q^{(k-1)}(\mathbf{\Pi})$

$\mathbf{Z} \rightarrow$ M-step

$\mathbf{Q}^{(k)}$

$\mathbf{Q}^{(k)}$

$\mathbf{Z} \rightarrow$ E-step

$q^{(k)}(\mathbf{X})\, q^{(k)}(\mathbf{\Pi})$

Fig. 5

# EP 1 980 994 A1

**European Patent Office**

## EUROPEAN SEARCH REPORT

Application Number

EP 07 25 1591

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 795 567 B1 (CHAM TAT-JEN [US] ET AL) 21 September 2004 (2004-09-21) * column 9, line 26 - line 33; figures 1a,1b,16 * * abstract * ----- | 1-32 | INV. G06T7/20 |
| A | MACCORMICK J ET AL: "A probabilistic exclusion principle for tracking multiple objects" INTERNATIONAL JOURNAL OF COMPUTER VISION, KLUWER ACADEMIC PUBLISHERS, NORWELL, US, vol. 39, no. 1, 2000, pages 57-71, XP007902729 ISSN: 0920-5691 * the whole document * ----- | 1-32 | |
| A | JAWARD M ET AL: "Multiple Object Tracking Using Particle Filters" AEROSPACE CONFERENCE, 2006 IEEE BIG SKY, MT, USA 04-11 MARCH 2006, PISCATAWAY, NJ, USA,IEEE, 4 March 2006 (2006-03-04), pages 1-8, XP010928592 ISBN: 0-7803-9545-X * page 2, right-hand column - page 5, left-hand column * ----- | 1-32 | TECHNICAL FIELDS SEARCHED (IPC) G06T |

The present search report has been drawn up for all claims

| Place of search | Date of completion of the search | Examiner |
|---|---|---|
| Munich | 7 August 2007 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

## ANNEX TO THE EUROPEAN SEARCH REPORT
## ON EUROPEAN PATENT APPLICATION NO.

EP 07 25 1591

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2007

| Patent document cited in search report | Publication date | Patent family member(s) | Publication date |
|---|---|---|---|
| US 6795567 B1 | 21-09-2004 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6590999 B

### Non-patent literature cited in the description

- **D. COMANICIU ; V. RAMESH ; P. MEER.** Real-time tracking of non-rigid objects using mean shift. *Proc. IEEE Computer Vision and Pattern Recognition Conference,* 2000, vol. 2, 142-149
- **A. ELGAMMAL ; R. DURAISWAMI ; L. DAVIS.** Probabilistic tracking in joint feature-spatial spaces. *Proc. IEEE Computer Vision and Pattern Recognition Conference,* 2003, vol. 1, 781-788
- **A. ELGAMMAL ; L. DAVIS.** Probabilistic framework for segmenting people under occlusion. *Proc. International Conference on Computer Vision,* 2001, 145-152
- **Y. RAJA ; S. J. MCKENNA ; S. GONG.** Colour model selection and adaption in dynamic scenes. *Proc. European Conference on Computer Vision,* 1998, 460-474
- **Y. JIN ; F. MOKHTARIAN.** Fuzzy histogram for visual tracking. *Proc. IEEE Computer Vision and Pattern Recognition Conference,* 2007
- **ARTHUR E. C. PECE.** The Kalman-EM contour tracker. *Proc. Int'1 Workshop on Statistical and Computational Theories of Vision,* 2003
- **Z. ZIVKOVIC ; B. KROSE.** An EM-like algorithm for color-histogram-based object tracking. *Proc. IEEE Computer Vision and Pattern Recognition Conference,* 2004, vol. 1, 798-803
- **T. YU ; Y. WU.** Differential tracking based on spatial-appearance model (SAM. *Proc. IEEE Computer Vision and Pattern Recognition Conference,* 2006, 720-727
- **J. VERMAAK ; N. D. LAWRENCE ; P. PEREZ.** Variational inference for visual tracking. *Proc. IEEE Computer Vision and Pattern Recognition Conference,* 2003, 773-780
- **W. M. WELLS.** Statistical approaches to feature-based object recognition. *International Journal of Computer Vision,* 1997, vol. 1 (2), 63-98
- **P. WILLETT ; Y. RUAN ; R. STREIT.** PMHT: problems and some solutions. *IEEE Transactions on Aerospace and Electronic Systems,* 2002, vol. 38 (3), 738-754
- **M. ISARD ; J. MACCORMICK.** BraMBLe: A bayesian multiple-blob tracker. *Proc. International Conference on Computer Vision,* 2001, vol. 2, 34-41
- **Y. WU ; T. YU ; G. HUA.** Tracking appearances with occlusions. *Proc. IEEE Computer Vision and Pattern Recognition Conference,* 2003, 789-795
- **J. MACCORMICK ; A. BLAKE.** A Probabilistic Exclusion Principle for Tracking Multiple Objects. *International Journal of Computer Vision,* 2000, vol. 39 (1), 57-71
- **Y. JIN ; F. MOKHTARIAN.** Towards robust head tracking by particles. *Proc. IEEE International Conference on Image Processing,* 2005
- **R. T. COLLINS ; Y. LIU ; M. LEORDEANU.** Online selection of discriminative tracking features. *IEEE Transactions on Pattern Analysis and Machine Intelligence,* 2005, vol. 27 (10), 1631-1643
- **J. SULLIVAN ; A. BLAKE ; M. ISARD ; J. MACCORMICK.** Object localization by Bayesian correlation. *Proc. International Conference on Computer Vision,* 1999, 1068-1075
- **M. SONKA ; V. HLAVAC ; R. BOYLE.** Image Processing, Analysis and Machine Vision. PWS Publishing, 1998, 90-93
- **A. BLAKE ; M. ISARD.** Active Contours. Springer, 1998, 41-96
- **Y. BAR-SHALOM.** Tracking methods in a multitarget environment. *IEEE Transactions on Automatic Control,* 1978, vol. 23 (4), 618-626
- **T. FORTMANN ; Y. BAR-SHALOM ; M. SCHEFFE.** Sonar tracking of multiple targets using joint probabilistic data association. *IEEE Journal of Oceanic Engineering,* 1983, vol. 8 (3), 173-183
- **A. DEMPSTER ; N. LAIRD ; D. RUBIN.** Maximum likelihood from incomplete data via the EM algorithm. *Journal of the Royal Statistical Society Series B,* 1977, vol. 39 (1), 1-38
- **R. M. NEAL ; G. E. HINTON.** A new view of the EM algorithm that justifies incremental, sparse and other variants. *Learning in Graphical Models,* 1998, 355-368
- **T. P. MINKA.** Using lower bounds to approximate integrals. *Tutorial Note,* 1999